# EUROPEAN PATENT APPLICATION

(11) **EP 4 546 944 A1**
(43) Date of publication of application: **30.04.2025**
(21) Application number: 24208205.5
(22) Date of filing: 22.10.2024
(51) Int. Cl.: H04W 88/08, H04W 84/12, H04W 12/069, H04L 9/40

(54) **SUPPORTING MULTIPLE PRE-SHARED KEYS IN WI-FI NETWORKS**

(30) Priority: 23.10.2023 IN 202341072217; 31.01.2024 US 202418428180
(71) Applicant: Cambium Networks Ltd, Ashburton, Devon TQ13 7UP (GB)
(72) Inventor: KARUNAKARAN, Kumara Das, 60008 Rolling Meadows (US); SOLANKI, Kunal Kumar, 560037 Bangalore (IN); DHYANI, Prabhash, 560037 Bangalore (IN); ABDULSALAM, Azif, 60008 Rolling Meadows (US); REDDY, Geereddy Anil Kumar, 560037 Bangalore (IN)
(74) Representative: EIP

(57) **Abstract**

A network device, a method for the network device, and a network system comprising one or more such network devices is provided. The method for the network device involves receiving a connection request from a client device, the connection request including a MAC address and being generated using a PSK. A database is accessed to determine if a record associating the MAC address with a PSK exists. If such a record does exist, then authentication is attempted using the PSK identified using the record. If such a record does not exist, then a process for generating a new record for the database is performed. A non-transitory computer-readable storage medium comprising instructions for implementing the method is also provided.

## Description

### BACKGROUND OF THE INVENTION

### Field of the Invention

The present invention relates to Wi-Fi network association and authentication for client devices. More specifically, but not exclusively, the present invention relates to supporting the use of multiple PSKs in a single Wi-Fi network.

### Description of the Related Technology

Wi-Fi, short for "Wireless Fidelity", is a family of wireless network protocols based on the IEEE 802.11 family of standards. They are commonly used for local area networking (LAN) of client devices and the internet without the need for physical wired connections. Instead, Wi-Fi networks allow nearby client devices to exchange data by radio waves. It allows multiple client devices, such as smartphones, laptops, tablets, smart TVs, and more, to communicate and access the internet within a specific coverage area.

WPA2, or Wi-Fi Protected Access 2, is a security protocol and standard designed to secure wireless computer networks. It is an improvement over the original WPA (Wi-Fi Protected Access) standard and is used to protect Wi-Fi networks from unauthorized access and eavesdropping. WPA3 is the newest generation of Wi-Fi Protected Access security protocol and standard.

### SUMMARY

According to a first aspect, there is provided a computer-implemented method for network devices to support multiple pre-shared keys in a Wi-Fi network, the computer-implemented method comprising: storing a database comprising a plurality of records associated with a service set identifier (SSID) for the Wi-Fi network, each record associating a Media Access Control (MAC) address with a respective pre-shared key of a plurality of pre-shared keys, and comprising the plurality of pre-shared keys; receiving a connection request from a client device requesting to connect to the Wi-Fi network, the connection request including a MAC address associated with the client device and being generated using a first pre-shared key; determining whether the database comprises a said record associated with the MAC address; dependent on an outcome of the determining whether the database comprises the said record, performing a first process or a second process, wherein the first process is performed if the database does comprise the said record and the second process is performed if the database does not comprise the said record, the first process comprising: determining a second pre-shared key based at least on the said record; and authenticating the client device using the second pre-shared key; and the second process comprising generating a new record for the database for authenticating the client device.

According to a second aspect there is provided a network device for facilitating client devices to connect to a Wi-Fi network, the network device comprising at least one processor, one or more communications modules, and storage storing computer-executable instructions which, when executed by the at least one processor to: receive a connection request from a client device, the connection request including a Media Access Control (MAC) address associated with the client device and being generated using a first pre-shared key; access a database comprising a plurality of records associated with a service set identifier (SSID) for the Wi-Fi network, each record associating a MAC address with a respective pre-shared key of a plurality of pre-shared keys, and comprising the plurality of pre-shared keys, to determine whether the database comprises a said record associated with the MAC address; depending on an outcome of the determining whether the database comprises the said record perform a first process or a second process, wherein the first process is performed if the database does comprise the said record and the second process is performed if the database does not comprise the said record, the first process comprising: determining a second pre-shared key based at least on the said record; and authenticating the client device using the second pre-shared key, and the second process comprising generating a new record for the database for authenticating the client device on the network.

According to a third aspect there is provided a network system comprising one or more network devices according to the second aspect.

According to a fourth aspect there is provided a non-transitory computer-readable storage medium comprising computer-executable instructions which, when executed by a processor, cause the processor to: receive a connection request from a client device, the connection request including a Media Access Control (MAC) address associated with the client device and being generated using a first pre-shared key; access a database comprising a plurality of records associated with a service set identifier (SSID) for the Wi-Fi network, each record associating a MAC address with a respective pre-shared key of a plurality of pre-shared keys, and comprising the plurality of pre-shared keys, to determine whether the database comprises a said record associated with the MAC address; depending on an outcome of the determining whether the database comprises the said record perform a first process or a second process, wherein the first process is performed if the database does comprise the said record and the second process is performed if the database does not comprise the said record, the first process comprising: determining a second pre-shared key based at least on the said record; and authenticating the client device using the second pre-shared key, and the second process comprising generating a new record for the database for authenticating the client device on the network.

### BRIEF DESCRIPTION OF THE DRAWINGS

Figure 1 is a schematic diagram showing a network device according to examples.
Figure 2 is a schematic diagram showing a Wi-Fi network according to examples.
Figure 3 is a flow chart showing a method according to examples.
Figure 4 is a schematic flow diagram of a method according to examples.
Figure 5 is a schematic diagram of a database comprising a plurality of records according to examples.
Figure 6 is a schematic flow diagram of a method according to examples.
Figure 7 is a schematic diagram of a non-transitory computer-readable storage medium according to examples.

### DETAILED DESCRIPTION OF CERTAIN INVENTIVE EMBODIMENTS

Typical components and characteristics of Wi-Fi networks include Access points (APs), Service Set Identifiers (SSIDs), encryption, pre-shared keys (PSK), frequency bands, and standards.

APs, or wireless APs, are network devices that allow Wi-Fi enabled devices, such as smartphones, laptops, tablet, and smart TVs, to connect to a wired network, or the internet, wirelessly. APs act as bridges between wireless clients, or client devices, and a wired network, facilitating wireless communication within a specific coverage area.

Wireless APs provide a number of key functions, including wireless connectivity, emitting radio signals usually on 2.4GHz, 5GHz, or 6GHz frequency bands that enable Wi-Fi devices to connect to a network. APs also facilitate SSID broadcast, in which the APs broadcast an SSID which is the name of the wireless network to which they provide access. APs typically include security features to protect the wireless network. This may include encryption methods (e.g. WPA2/WPA3), MAC address filtering, and the ability to set a password or pre-shared key for network access.

In larger networks, multiple access points are often used to provide continuous coverage. Client devices may be able to seamlessly switch between different access points as they move within the coverage area, ensuring uninterrupted connectivity. Access points manage the association and disassociation of wireless clients. When a client device wants to connect to the network, it communicates with the access point to establish a connection. APs may help manage the allocation of radio channels to avoid interference and congestion in crowded Wi-Fi environments. They may automatically select the best channel or allow for manual configuration.

SSIDs are fundamental elements of wireless networking and are used to identify and name wireless networks. In other words, an SSID is the name of a wireless network that is seen by client devices when searching for available networks. The SSID is typically chosen by an administrator at the point when the network is configured. In some cases, a network administrator may configure multiple SSIDs on a single Wi-Fi router or AP, each being associated with a different network or VLAN (Virtual LAN), allowing for network isolation and segmentation.

A pre-shared key (PSK) is a secret passphrase or encryption key used in various security protocols to authenticate and establish secure communication between two parties, typically in the context of network security. PSKs are commonly used in Wi-Fi networks and other encrypted communications. The term "pre-shared" refers to the fact that both parties must have the same key in advance of communication.

In the context of Wi-Fi networks a PSK is a password or passphrase that is used to secure the Wi-Fi network. When a user wants to connect a client device to a Wi-Fi network, they select the network, using the SSID of the network, and enter the correct PSK. If the PSK matches the one configured on the wireless router or access point, the user gains access to the network. Common Wi-Fi security protocols that use PSKs include WPA2-PSK (Wi-Fi Protected Access 2 with Pre-Shared Key) and WPA3-PSK.

When a wireless client connects to an AP it completes a four-way handshake, which generates the encryption keys used to encrypt wireless traffic. For the four-way handshake to work it is a requirement that both the client device and the AP know the passphrase, e.g. the PSK, however, the passphrase is never transmitted over the air thereby usually making this exchange reasonably secure.

Publicly accessible networks, or networks in which the PSK is widely distributed, represent a challenge for network security. In publicly accessible networks, such as in cafés, at universities, restaurants, hotels, and the like, the PSKs are widely shared. If a third party knows the passphrase, then by capturing the four-way handshake it is possible to generate the encryption keys and decrypt wireless traffic between the client device and the AP.

A solution to this problem, provided by Cambium Networks^{™} and referred to as ePSK, is to support multiple PSKs on a single network. In this solution, a single Wi-Fi network, using a given SSID, may be configured to provide each client device, or a specific group of devices, a unique PSK when using WPA2. By providing each client device, or a group of client devices, a unique PSK the security of connecting with the network is increased as no unauthorized third parties will be able to determine the encryption used in wireless messages without access to this unique PSK.

Additionally, the use of ePSK enables a personalized service to be provided to specific client devices on a single network. For example, each PSK may be associated with a specific network service configuration, or a VLAN, such that by using a given PSK to connect to a Wi-Fi network it is possible to automatically manage the services provided to a given client device and/or to segment the network without having to establish multiple SSIDs.

Further, if a given client device associated with or configured to use a unique PSK is lost, or stolen, the unique PSK can be revoked by the network, preventing unauthorized access, without affecting the ability of other client devices to connect to the network.

When using ePSK in WPA2 enabled networks, a client device initiates a WPA2 handshake with an AP using a message generated, at least in part, using a specific PSK. The AP then attempts to match the PSK used by the client device with every PSK configured on the network until a match is found. Once a match is found, the device is authenticated, and a connection is established. This method, however, has, surprisingly, been found to be incompatible with evolving network protocols and standards, such as WPA3. In WPA3 connection attempts like this have been found to not be allowed as they are considered attacks.

Certain examples described herein, provide methods and systems for enabling ePSK, or multiple PSKs, to be supported in Wi-Fi networks that implement WPA2 and/or WPA3. A database storing records associating MAC addresses with PSKs is maintained. When a client device attempts to connect to the Wi-Fi network the database is consulted, using the MAC address of the requesting client device, to determine which PSK is being used by the client device, such that they can be authenticated in the network. If the database does not include a record indicating which PSK is being used by the client device, then a procedure for generating a record in the database is initiated.

In certain examples, generating the record in the database is dependent on whether the client device is using WPA2 or WPA3. Client devices using WPA3 are instructed initially to connect to the network using a common PSK, that enables them to access a captive portal for registering the client device such that subsequent connections may use their unique PSK.

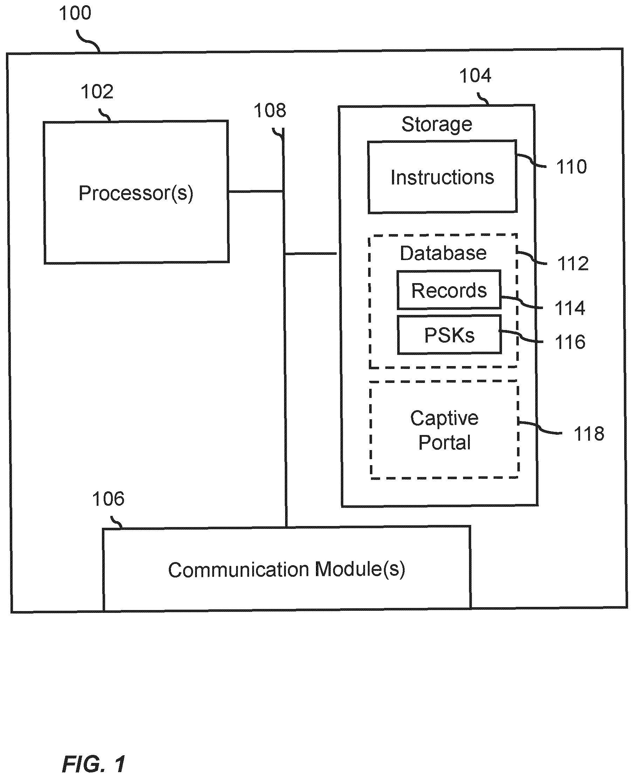

Figure 1 shows an example of a network device 100 for facilitating client devices to connect to a Wi-Fi network according to examples described herein. The network device comprises one or more processor(s) 102, storage 104, and in some cases one or more communications modules 106. The processor(s) 102, storage 104, and communication module(s) 106 are connected over a communication channel, such as a bus 108, allowing them to communicate with each other.

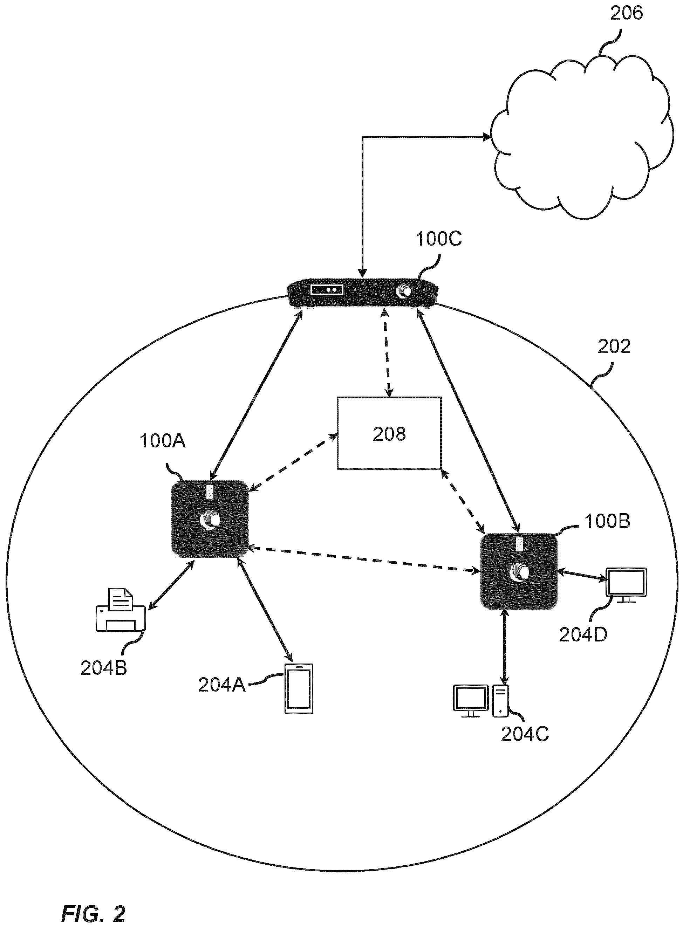

The storage 104 is suitable for storing a set of computer-executable instructions 110 for executing a method 300, which will be described further below with respect to Figures 2 to 6. The storage 104 may also be suitable for storing other types of data such as database 112 and/or program code 118 for implementing a captive portal as will be described further below. The storage 104 may include any combination of volatile and non-volatile storage, for example, a combination of read-only memory (ROM) and one or more types of random-access memory (RAM), such as dynamic RAM, synchronous RAM, and so forth. ROM may be included in the form of both discbased (e.g. hard drive) or flash memory (e.g. solid-state drive(s)).

The processor(s) 102 may include any suitable combination of processing circuitry configured to execute the instructions 110. The processor(s) 102 may include one or more general purpose processors, such as central processing units (CPU), and/or application specific processing circuitry or processing units. The network device 100 may additionally include one or more communications modules 106 configured to enable communication with one or more further computing devices, for example, as part of a network. The communications module(s) 106 may comprise wireless and/or wired communications modules to enable at least one of wired LAN and wireless LAN connectivity. These communications modules 106 may implement known protocols and standards such as Wi-Fi, Bluetooth, Ethernet, and so forth. The network device 100 may be capable of communicating over both local and wide area networks via the communications module(s) 106.

Turning to Figure 2 a network environment in which the network device 100 may deployed is shown. The network device 100 may be an access point 100A and 100B or may be implemented as a more sophisticated network management device 100C such as a network edge device configured to facilitate communication between client devices 204A to 204D in the network 202 with one or more external networks 206, such as the internet. In the examples in which the network device 100 is an access point 100A and 100B the network device 100 is configured to enable client devices 204A to 204D to connect in the network 202.

The network 202 is a local area networks such as that which may be deployed in a home or office environment to enable network computing functions such as file transfer, printing, and so forth between client devices 204A to 204D. The client devices 204A to 204D may also be referred to as user devices, computing devices, or simply devices, it will be appreciated that these devices may not be associated with specific users. A distinction is drawn between the network devices 100A to 100C which operate to enable communication in the network 202, and the client devices 204A to 204D, which use the network capabilities to communicate amongst each other.

In the example shown in Figure 2, a plurality of device types is shown including printers 204B, smartphones 204A, desktop computers 204C, smart televisions 204D. The devices shown in Figure 2 and connected in the network 202 are provided as examples only and it is to be appreciated that a variety of communications enabled computing devices, not shown, may also be connected to the network 202, such as servers, remote storage, laptop computers, tablet computers, and so forth.

The network devices 100A to 100C may implement a number of network functions for managing devices 204A to 204D including authentication, bandwidth distribution, message forwarding, and switching. While in the example shown, the network devices 100A to 100C include different types of network devices, it will be appreciated that in other examples, the network devices 100 configured to implement the methods described herein, may be access points 100A and 100B. Additionally network management devices, such as edge devices, may not implement the methods described herein.

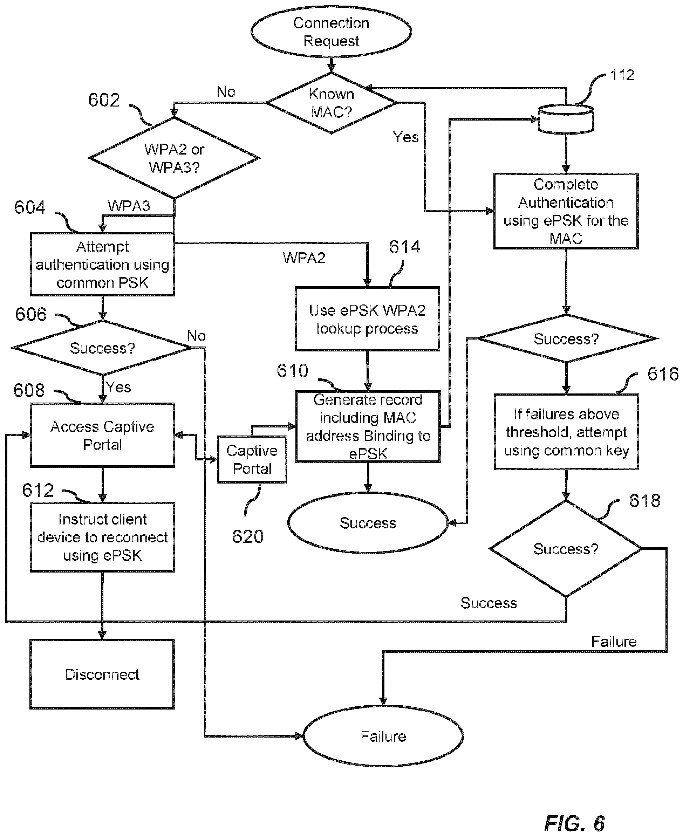

The network 202 may also include a network device 208 hosting a captive portal. The network device 208 may be in communication with any one or more of the other networks devices 100A to 100C including access points and/or network edge devices. To this end the network device 208 hosting the captive portal may include processors, storage, and communications module similar to those described above in relation to the other network devices 100. The captive portal will be described further below with respect to Figure 6.

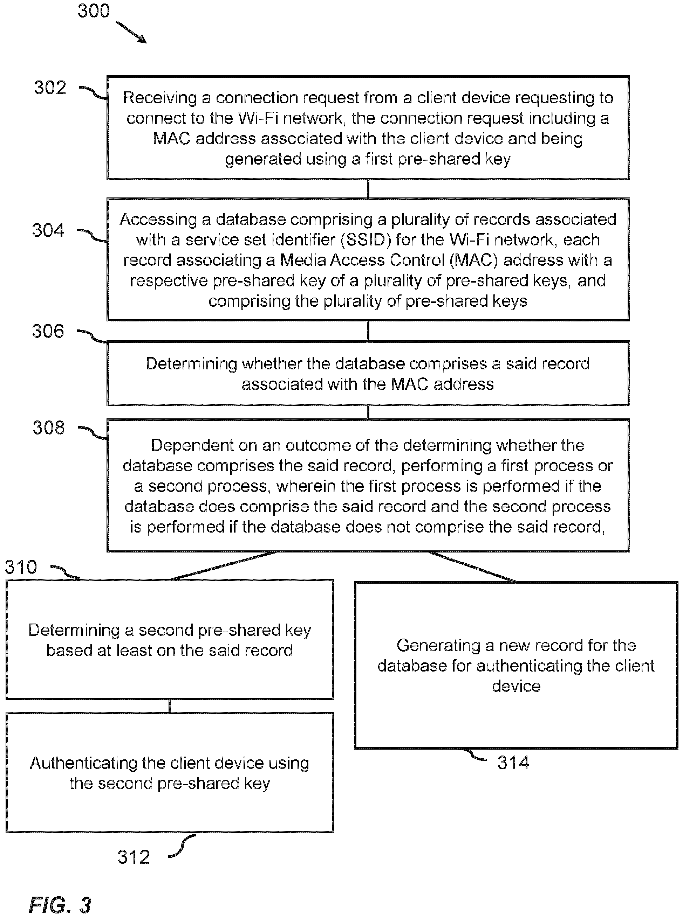

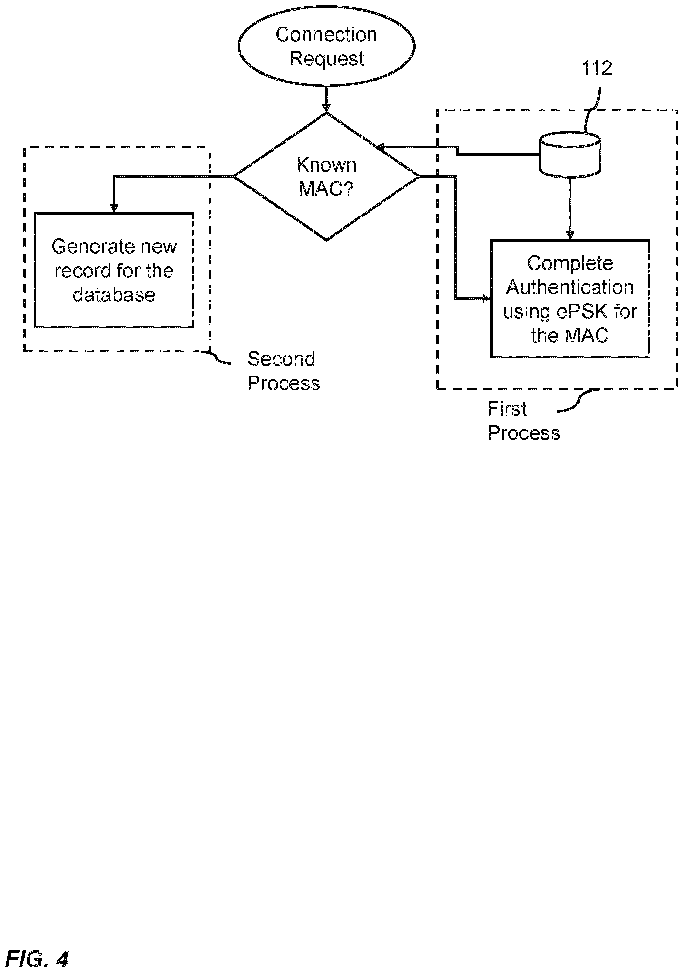

As briefly mentioned above, the storage 104 includes instructions 110 for performing a method 300 in the network management device 100, shown in the flow chart of Figure 3 and the schematic flow diagram of Figure 4. The method 300 will now be described with respect to Figures 2 to 6. The method involves receiving 302 a connection request from a client device 204A to 204D requesting to connect to the Wi-Fi network. The connection request includes a MAC address associated with the client device 204A to 204D and being generated using a first PSK. Wherein generating the connection request using the first PSK may involve processing a number, or other data, using the PSK to cryptographically transform said number, or other data. That cryptographically transformed number may then be included in the connection request.

Throughout the proceeding disclosure, the labels "first", "second", "third", and so forth, are used in relation to the PSKs. It is to be appreciated that these labels are not intended to be restrictive. The use of these labels is intended to distinguish between differences in where these keys are stored and/or at which point they are determined and/or accessed. As will become apparent from the disclosure below, these PSKs may be the same keys, or different keys, depending on the specific circumstances.

The connection request may, for example, include an association request. When a client device 204A to 204D wants to join a wireless network, it may send an Association Request frame to the AP or Wi-Fi router. This frame contains information about the client's capabilities and the network it wants to join. The AP evaluates this request, and if it accepts it, it sends back an Association Response frame, allowing the client to join the network. This process is part of the initial handshake that occurs when a client connects to a Wi-Fi network.

In other examples, the connection request may include additional functions, and/or other types of connection requests such as requests to establish or re-establish a connection with a specific Wi-Fi network, requests for network access, requests to roam between access points within the same network, or requests for re-authentication when a connection is temporarily lost.

The method 300 additionally involves accessing 304 a database 112 comprising a plurality of records 114 associated with a service set identifier (SSID) for the Wi-Fi network 202. Each record 114 associates a MAC address with a respective PSK of a plurality of PSKs. The database 112 also includes the plurality of PSKs 116. The plurality of PSKs 116 include, for example, all PSKs that are configured for use on the network 202. Where the network 202 is configured to implement ePSK, this may include all of the multiple PSKs that have been configured for use by different client devices. In some cases, each PSK may be associated with a respective network configuration which may define, for example, enabled services, connection requirements, bandwidth allocation, network management features, and in some cases a VLAN.

In some examples, the network device 100 may store the database 112, as shown in Figure 1, however, it will be appreciated that the database 112 may alternatively be stored on a separate storage device such as a network 202 attached storage device, or on a single AP, with which the network device 100 can communicate to access the database 112. Where the database 112 is stored on one of the access points 100A, the other access points 100A and 100B and/or the network edge device 100C may be capable of communicating with the access points100A storing the database 112. In other examples, the network devices 100 may cooperatively store the database 112 in which each network device stores a portion of the database 112. This may include the use of the access points 100A and 100B and the network edge device 100C, or any suitable combination of a subset of these network devices 100A to 100C.

It is determined 306 whether the database 112 comprises a said record associated with the MAC address of the client device 204A to 204D. This may be performed by searching the database 112 using the MAC address of the requesting client device 204A to 204D. Depending on whether the MAC address of the client device 204A to 204D is a known MAC address, which is to say whether the said record associating the MAC address with a PSK is found, the method 300 involves performing 308 either a first process, or a second process.

The first process is performed if the database 112 does comprise the said record, and as such a binding between the MAC address of the client device 204A to 204D and a respective PSK is known. The first process comprises determining 310 a second PSK based at least on the said record and authenticating 312 the client device 204A to 204D using the second PSK. If the client device 204A to 204D is using the same PSK that is associated with the MAC address according to the said record, then the first PSK and the second PSK will be the same key, and authentication will be successful. It will be appreciated that if a user of the client device 204A to 204D enters an incorrect PSK, or a PSK that differs to the one associated with the MAC address of the device 204A to 204D, then authentication will be unsuccessful.

Dependent on the authenticating the client device 204A to 204D being successful, the network device 100 will perform a handshake with the client device 204A to 204D and provide the client device 204A to 204D with access to the network 202. The handshake may involve establishing private encryption keys to be used to encrypt messages transmitted between the client device 204A to 204D and the network device 100.

The second process, performed if the database 112 does include the said record, involves generating 314 a new record for the database 112 for authenticating the client device 204A to 204D, for example, the new record including an association between the MAC address the client device 204A to 204D used in the connection request, and a PSK which is to be used by the client device to connect to the network 202.

By generating a new record in the database 112 for the client device 204A to 204D, future connection requests from that client device 204A to 204D will be authenticated by identifying the new record and authenticating the device 204A to 204D using the PSK associated with the client device 204A to 204D in the new record.

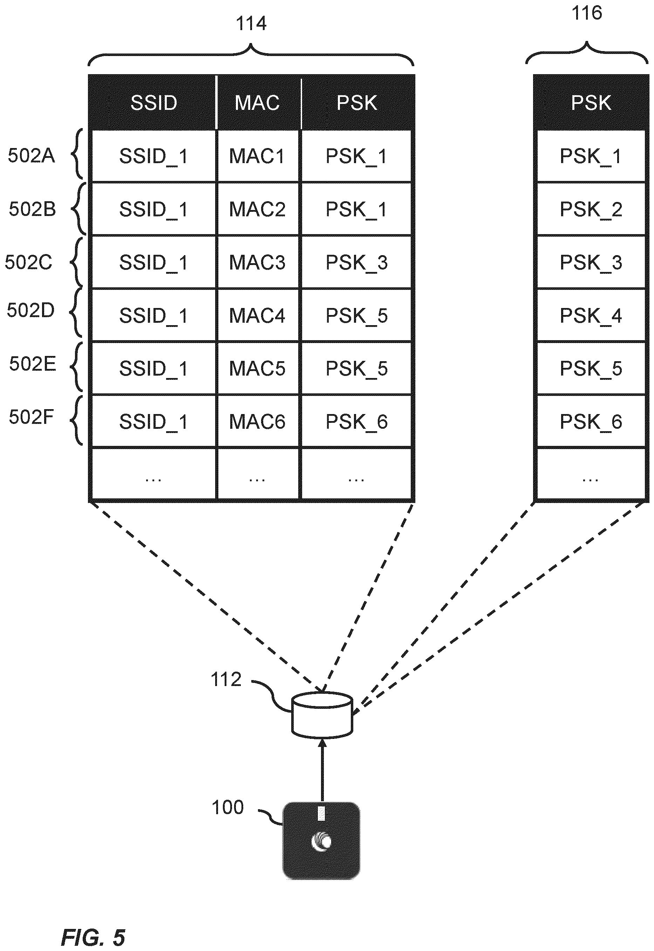

Turning briefly to Figure 5, an example of the database 112 is shown. The database 112 comprises a plurality of records 502A to 502F. In the example shown, each of the records includes an association to a specific SSID, SSID_1. However, it will be appreciated that rather than including a specific indication of the SSID to which the record 502A is associated, the database 112 itself may be specific to a given SSID, such that each record need not include an indication of the SSID.

In the example shown, the records 114 each include the respective PSK to which the MAC address is associated. Some MAC addresses, such as MAC1 and MAC2, may be associated with the same PSK, PSK_1. This may be the case where, for example, the network 202 is configured to implement VLAN for certain devices, such as those associated with MAC1 and MAC2. Alternatively, every MAC address may be associated with a unique PSK.

The database 112 also includes the PSKs that are configured on the network 202. These PSKs, PSK_1 to PSK_6, may include PSKs not currently associated with any specific MAC address, for example PSK_2 and PSK_4. This may be the case where an administrator has configured these PSKs on the network, but a client device has not yet attempted to connect to the network 202 using those PSKs.

In some examples, not shown, the plurality of PSKs 116 may be stored with an association with a network configuration associated with the respective PSK. For example, where certain PSKs are associated with the use of a specific VLAN in the network, the plurality of PSKs 116 may include an indication of a VLAN ID for each of the PSKs. In other examples, and indication of a network configuration may be stored in association with the PSKs 116 in the database 112.

As briefly mentioned above, the records 502A to 502F, such as those shown in the example of Figure 5, may include the respective PSKs. In this case, determining the second PSK involves reading the second PSK from the said record to be used to authenticate the client device 204A to 204D. Alternatively, the record 502A may include a search vector or identifier to be used to identify the second PSK. In this case, determining the second PSK may involve determining a search vector from the said record 502A and identifying the second PSK in the plurality of PSKs 116. Storing a search vector or identifier in the records 114, rather than the full PSK, may reduce the storage requirements in the database 112.

In some examples, the second process comprises determining whether the client device 204A to 204D is using WPA3 or WPA2 and generating the new record for the database 112 is performed in a manner dependent on whether the client device is using WPA3 or WPA2. As discussed above, the methods used for enabling multiple PSKs using WPA2 have been found not to be suitable for WPA3. By first determining whether the client device is using WPA2 or WPA3 before generating the new record, it is possible to implement networks with extensive interoperability with a number of security protocols such as WPA2 and WPA3. It is therefore possible to support a wide range of client device types and models, and those client devices which are able to use both WPA2 and WPA3.

Turning to Figure 6, additional examples of network device 100 behavior are shown, dependent on whether the client device 204A to 204 is using WPA2 or WPA3. Whether the client device 204A to 204 is using WPA2 or WPA3 is determined 602. In some examples, this may be determined by processing the connection request to determine an indication of whether the client device 204A to 204D is using WPA2 or WPA3. It is possible for some client devices 204A to 204D to use either WPA2 or WPA3. For example, the latest generation of smartphones typically support WPA2 and WPA3. Hence determining whether the client device 204A to 204D is using WPA2 or WPA3 allows the network device 100 to appropriately handle connection requests when the MAC address to PSK binding is not known in the database 112.

If the client device 204A to 204D is using WPA3, then generating the new record for the database 112 includes authenticating the client device 204A to 204D using a third PSK, the third PSK being a common PSK. The common PSK may be stored in the database 112 as one of the plurality of PSKs 116. Dependent on the authenticating the client device 204A to 204D using the third PSK being successful 606, providing access 608 to a captive portal 620 to enable the client device 204A to 204D to register with the network 202. A request from the client device 204A to 204D to register with the network is then received using the captive portal 620, and a new record for the database 112 is generated 610, the new record for the database 112 associated the MAC address with a fourth PSK. The record may be specific to the SSID used to connect to the network, as described above.

In networks where network devices 100 implemented the method 300 are present, users attempting to connect to the network 202 may be provided a common PSK to be used when initially establishing a connection. For example, where the network is in a public space, such as a café or restaurant, the PSK provided to users may be a common PSK. This common PSK may be used to provide limited access that is restricted to the captive portal such that a new record can be created for the database 112. If the connection request from the client device 204A to 204D using WPA3 is not generated using the common PSK, and there is no associated record for the client device 204A to 204D, then authentication will fail, and the device 204A to 204D will not be provided access to the network.

The captive portal 620 may be hosted by the network device 100, wherein the network device 100 includes computer program code 118 for hosting the captive portal 620, or may be hosted by another device 208 in the network 202. This may include, for example, any one of network devices 100A to 100C. Where the captive portal is hosted by another device 208 in the network, providing access to the captive portal may involve the network device 100 facilitating communication, such as forwarding messages received from the client device 204A to 204D to the the additional device 208 hosting the captive portal and forwarding messages from the additional device 208 hosting the captive portal to the client device 204A to 204D.

The fourth PSK associated with the MAC address in the new record in this example, may be a PSK currently stored in the database 112 in the plurality of PSKs 116. The fourth PSK may already be associated with one or more MAC addresses in the records 114. Alternatively, the fourth PSK may not be currently known in the database 112, for example the fourth PSK may be unique to the client device 204A to 204D and stored in the database 112 on registration of the client device 204A to 204D.

The second process may comprise, after generating the new record for the database 112 associating the MAC address of the client device 204A to 204D with the fourth PSK, sending 612 a message to the client device 204A to 204D to disconnect and send a connection request using the fourth PSK. This message may be automatically displayed on an interface of the client device 204A to 204D to instruct a user of the client device to reconnect using the fourth PSK. Alternatively, this message may include an instruction to the client device 204A to 204D causing the client device 204A to 204D to automatically send a connection request to the network device 100 using the fourth PSK. After providing 612 the instruction to the client device to send a new connection request using the fourth PSK, the network device 100 may automatically disconnect the client device 204A to 204D.

If the client device 204A to 204D is using WPA2, then generating a new record for the database 112 may comprise authenticating 614 the client device 204A to 204D using an identified fifth PSK. The fifth PSK may be identified by iteratively attempting authentication using a different one of the stored plurality of PSKs 116 until authentication is successful. Once the fifth PSK has been identified and successfully used to authenticate the client device 204A to 204D, a new record is then generated 610 using the fifth PSK and the MAC address of the client device 204A to 204D. The authentication in this case will be successful if the first PSK, used by the client device 204A to 204D, is known in the database 112, in other words, the fifth PSK is the same as the first PSK. As with other examples discussed above, the fifth PSK may be associated with one or more further client devices 204A to 204D or may be unique to the given client device 204A to 204D sending the connection request.

The plurality of PSKs 116 may include the common PSK. If the client device 204A to 204D that has sent the connection request is using the common PSK, then the identified fifth PSK may be the common PSK. In this case, the method 300 may involve providing the client device 204A to 204D to the captive portal to register. Similar to the process described above for client devices 204A to 204D using WPA3 and sending the initial connection request using the common PSK, the captive portal may be used to register the client device 204A to 204D and instructing the client device 204A to 204D to disconnect and reconnect using a newly registered PSK.

By treating requests from client devices 204A to 204D differently, as described above, it is possible to implement multiple PSK for client devices using WPA3, while also performing a process for client devices using WPA2 which requires less interaction from the client device following the initial connection request. It is also noted that Wi-Fi- networks may operate on multiple bands including 2.4GHz, 5GHz, and 6GHz. Different radio bands are associated with different standards and so while some radio bands typically use WPA2, others may use WPA3. For network load balancing and performance enhancement, network devices 100 may be capable of balancing the load on each band by spreading the client devices 204A to 204D over multiple bands. In this case, a client device 204A to 204D may be forced to use either of WPA2 or WPA3 when connecting to the network. As such, performing a specific process that generates a record in the database 112 that is associated with the MAC address of the device, means that once a record has been according to either of the WPA2 process or the WPA3 process, the client device 204A to 204D may subsequently reconnect to the network without having to perform those processes again regardless of whether they subsequently connect using WPA2 or WPA3. Hence band switching for load balancing in Wi-Fi networks is made easier and more efficient, requiring a record be generated only once.

As described above, the database 112 may be accessible to all network devices 100A to 100C in the network 202, for example, where the database 112 is hosted on a dedicated network attached storage device, stored locally on a single access point 100A, or cooperatively stored between all the network devices 100A to 100C. As such, when the binding between a MAC address and PSK is first learnt and stored in a record in the database 112, that information is accessible to all network devices 100A to 100C. Hence the record may be generated for the database 112 once, when the client device 204A to 204D is attempting to connect to a first access point 100A, and used by other access points 100B and/or network edge devices 100C when the client device 204A to 204D roams in the Wi-Fi network 202, or, for example, where the client device disconnects and reconnects to a different access point 100B.

Turning back to the first process, and referring to Figure 6, in some instances, while a said record associating the MAC address of the client device 204A to 204D to a PSK may be available in the database, the client device 204A to 204D may not successfully connect if it is using the wrong PSK. The method 300 may comprise monitoring the first process and, if authenticating the client device 204A to 204D using the PSK determined at least based on the said record, or the "second PSK" described above, is unsuccessful a series of additional steps may be performed. These steps include tracking a number of unsuccessful authentication attempts using the second PSK. Tracking a number of unsuccessful authentication attempts may require the network device 100 to communicate with one or more further network devices 100 operating in the network. For example, as a client device 204A to 204D moves within the network 202 they may roam between different access points. As such, and as authentication may be handled locally in a network device 100, communicating between network devices 100 enables the number of failed authentication attempts to be determined.

If the number of authentication attempts exceeds a predetermined threshold 616, the method 300 may involve attempting 618 to handshake with the client device 204A to 204D using the common PSK. In some cases, a client device 204A to 204D that has previously used the common PSK to register and generate a record on database 112, may be, incorrectly, still using the common PSK. This may be due to user error, in which a user has forgotten to update the PSK used to connect to the network after registering, e.g. via the captive portal. In other cases, the MAC address used by a client device 204A to 204D may change and the record associated with the MAC address of the client device 204A to 204D relates to a previous registration by a different client device 204A to 204D.

If the handshake with the client device 204A to 204D using the common PSK is successful, the method 300 may involve providing access to the captive portal to enable the client device to register with the network 202. A request from the client device 204A to 204D with the network using the captive portal is received, and a new record for the database 112 is generated, or a pre-existing record may be updated, that associates the MAC address with a PSK to be used by the client device 204A to 204D. In this way the client device 204A to 204D may re-register, and/or identify the PSK that is to be used. Additionally, if the client device 204A to 204D is provided access to the captive portal in this circumstance an instructional message may be sent to the client device 204A to 204D. The instructional message may tell the client device how to connect to the network 202 and which PSK to use. This may involve displaying the message to a user of the client device to allow them to attempt to reconnect using the PSK.

According to other aspects, a network system may be implemented using any one or more network devices 100. Where a plurality of network devices 100 are provided, the network system may be able to implement the communication features between the network devices 100 described above.

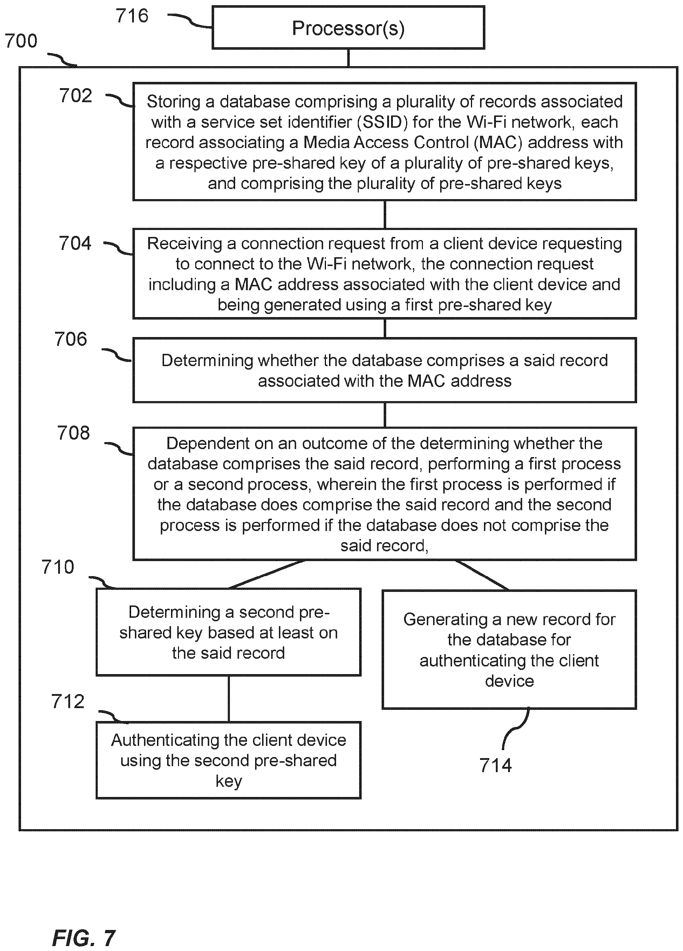

Turning to Figure 7, there is shown a non-transitory computer-readable storage medium on which is stored computer-executable instructions 702 to 714. The computer-executable instructions, when executed by a processor 716, cause the processor to 716 perform the method 300 described above including, receiving a connection request from a from a client device, the connection request including a Media Access Control (MAC) address associated with the client device and being generated using a first PSK; access a database comprising a plurality of records associated with a service set identifier (SSID) for the Wi-Fi network, each record associating a MAC address with a respective PSK of a plurality of PSKs, and comprising the plurality of PSKs, to determine whether the database comprises a said record associated with the MAC address; depending on an outcome of the determining whether the database comprises the said record perform a first process or a second process, wherein the first process is performed if the database does comprise the said record and the second process is performed if the database does not comprise the said record, the first process comprising: determining a second PSK based at least on the said record; and authenticating the client device using the second PSK, and the second process comprising generating a new record for the database for authenticating the client device on the network.

The above embodiments are to be understood as illustrative examples of the invention. Further embodiments of the invention are envisaged. For example, in some examples, such as for IoT devices that do not include user interface capabilities, entering a PSK for use in connecting to the network 202 may not be possible. To this end, the captive portal may provide for registration of a MAC address for additional devices beyond the client device 204A to 204D currently used to access the captive portal. For example, a client device 204A to 204D may use the captive portal to register the MAC address of an IoT device, such as a smart appliance or device, that does not include interface capabilities. In this way, a record may be generated for further devices, enabling them to connect to the network 202 using a PSK preconfigured in the IoT device. Alternatively, the captive portal may be accessed using a URL, or a mobile application, such that a user can manually enter the MAC address of further client devices, such as IoT devices, that are not capable of being reconfigured, for example, because they lack user interface capabilities.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

### Numbered Clauses

Various aspects of the present disclosure are set out according to the following numbered clauses.
1. A computer-implemented method for network devices to support multiple pre-shared keys in a Wi-Fi network, the computer-implemented method comprising:
   receiving a connection request from a client device requesting to connect to the Wi-Fi network, the connection request including a MAC address associated with the client device and being generated using a first pre-shared key;
   accessing a database comprising a plurality of records associated with a service set identifier (SSID) for the Wi-Fi network, each record associating a Media Access Control (MAC) address with a respective pre-shared key of a plurality of pre-shared keys, and comprising the plurality of pre-shared keys;
   determining whether the database comprises a said record associated with the MAC address;
   dependent on an outcome of the determining whether the database comprises the said record, performing a first process or a second process, wherein the first process is performed if the database does comprise the said record and the second process is performed if the database does not comprise the said record, the first process comprising:
      determining a second pre-shared key based at least on the said record; and
      authenticating the client device using the second pre-shared key;
      and the second process comprising generating a new record for the database for authenticating the client device.
2. The computer-implemented method of clause 1, wherein determining the second pre-shared key based at least on the said record comprises:
   determining a search vector from the said record and identifying the second pre-shared key in the plurality of pre-shared keys using the search vector; or
   reading the second pre-shared key from the said record.
3. The computer-implemented method of clause 1 or clause 2, wherein the method comprises, dependent on the authenticating the client device using the second pre-shared key being successful:
   performing a handshake with the client device; and
   providing the client device with access to the network.
4. The computer-implemented method of any one of clauses 1 to 3, wherein the second process further comprises determining whether the client device is using WPA3 or WPA2 and wherein generating a new record for the database is performed in a manner dependent on whether the client device is using WPA3 or WPA2.
5. The computer-implemented method of clause 4, wherein if the client device is using WPA3, generating the new record for the database comprises:
   authenticating the client device using a third pre-shared key, the third pre-shared key being a common pre-shared key;
   dependent on the authentication of the client device using the third pre-shared key being successful, providing access to a captive portal to enable the client device to register with the network;
   receiving a request from the client device to register with the network using the captive portal; and
   generating a new record for the database associating the MAC address with a fourth pre-shared key.
6. The computer-implemented method of clause 5, wherein the second process comprises, after generating a new record for the database associating the MAC address with a fourth pre-shared key, sending a message to the client device instructing the client device to disconnect and send a connection request using the fourth pre-shared key.
7. The computer-implemented method of any one of clauses 4 to 6, wherein if the client device is using WPA2 generating the new record for the database comprises:
   authenticating the client device using an identified fifth pre-shared key, wherein the fifth pre-shared key is identified by iteratively attempting authentication using a different one of the stored plurality of pre-shared keys until authentication is successful;
   generating a new record for the database associating the MAC address with the fifth pre-shared key.
8. The computer-implemented method of any one of clauses 4 to 7, wherein determining whether the client device is using WPA2 or WPA3 comprises processing the connection request to determine an indication of whether the client device is using WPA2 or WPA3.
9. The computer-implemented method of any preceding clause, wherein the method comprises monitoring the first process and, if authenticating the client device using the second pre-shared key is unsuccessful:
   tracking a number of unsuccessful authentication attempts using the second pre-shared key; and
   if the number of unsuccessful authentication attempts exceeds a predetermined threshold, attempting to handshake with the client device using a third pre-shared key, the third pre-shared key being a common key.
10. The computer-implemented method of clause 9, wherein if the handshake with the client device is successful, the method comprises:
   providing access to a captive portal to enable the client device to register with the network;
   receiving a request from the client device to register with the network using the captive portal; and
   generating a new record for the database associating the MAC address with a fourth pre-shared key.
11. The computer-implemented method of any preceding clause, wherein each of the plurality of pre-shared keys is associated with a respective network configuration.
12. The computer-implemented method of any preceding clause, wherein the connection requests are associated with the SSID, and the new record is associated with the SSID.
13. A network device for facilitating client devices to connect to a Wi-Fi network, the network device comprising at least one processor, one or more communications modules, and storage storing computer-executable instructions which, when executed by the at least one processor to:
   receive a connection request from a client device, the connection request including a Media Access Control (MAC) address associated with the client device and being generated using a first pre-shared key;
   access a database comprising a plurality of records associated with a service set identifier (SSID) for the Wi-Fi network, each record associating a MAC address with a respective pre-shared key of a plurality of pre-shared keys, and comprising the plurality of pre-shared keys, to determine whether the database comprises a said record associated with the MAC address;
   depending on an outcome of the determining whether the database comprises the said record perform a first process or a second process, wherein the first process is performed if the database does comprise the said record and the second process is performed if the database does not comprise the said record, the first process comprising:
      determining a second pre-shared key based at least on the said record; and
      authenticating the client device using the second pre-shared key,
      and the second process comprising generating a new record for the database for authenticating the client device on the network.
14. The network device of clause 13, wherein determining the second pre-shared key based at least one the said record comprises:
   determining a search vector from the said record and identifying the second pre-shared key in the plurality of pre-shared keys using the search vector; or
   reading the second pre-shared key from the said record.
15. The network device of clause 13 or clause 14, wherein the computer-executable instructions, when executed by the at least one processor, cause the processor to, dependent on the authenticating the client device using the second pre-shared key being successful:
   performing a handshake with the client device; and
   providing the client device with access to the network.
16. The network device of any one of clauses 13 to 15, wherein the storage comprises the database.
17. The network device of clause any one of clauses 13 to 15, wherein accessing the database comprises communicating with the database using the one or more communications modules.
18. The network device of any one of clauses 13 to 17, wherein the second process further comprises determining whether the client device is using WPA3 or WPA2 and wherein generating a new record for the database is performed in a manner dependent on whether the client device is using WPA3 or WPA2.
19. The network device of clause 18, wherein if the client device is using WPA3 generating the new record for the database comprises:
   authenticating the client device using a third pre-shared key, the third pre-shared key being a common pre-shared key;
   dependent on the authentication of the client device using the third pre-shared key being successful, providing access to a captive portal to enable the client device to register with the network;
   receiving a request from the client device to register with the network using the captive portal; and
   generating a new record for the database associating the MAC address with a fourth pre-shared key.
20. The network device of clause 19, wherein the computer-executable instructions, when executed by the at least one processor, cause the network device to host the captive portal.
21. The network device of any one of clauses 18 to 20, wherein if the client device is using WPA2 generating the new record for the database comprises:
   authenticating the client device using an identified fifth pre-shared key, wherein the fifth pre-shared key is identified by iteratively attempting authentication using a different one of the stored plurality of pre-shared keys until authentication is successful;
   generating a new record for the database associating the MAC address with the fifth pre-shared key.
22. The network device of any one of clauses 18 to 21, wherein determining whether the client device is using WPA2 or WPA3 comprises processing the connection request to determine an indication of whether the client device is using WPA2 or WPA3.
23. The network device of any one of clauses 18 to 22, wherein the computer-executable instructions, when executed by the at least one processor, cause the processor to monitor the first process and, if authenticating the client device using the second pre-shared key is unsuccessful:
   track a number of unsuccessful authentication attempts using the second pre-shared key; and
   if the number of unsuccessful authentication attempts exceeds a predetermined threshold, attempting to handshake with the client device using a third pre-shared key, the third pre-shared key being a common key.
24. The network device of clause 23, wherein tracking the number of unsuccessful authentication attempts includes communicating with one or more further network devices operating in the network.
25. The network device of clause 23 or 24, wherein the computer-executable instructions, when executed by the at least one processor, cause the processor to, if the handshake with the client device is successful:
   provide access to a captive portal to enable the client device to register with the network;
   receive a request from the client device to register with the network using the captive portal; and
   generate a new record for the database associating the MAC address with a fourth pre-shared key.
26. A network system comprising one or more network devices according to one of clauses 13 to 25.
27. A network system of clause 26, further comprising a storage device on which the database is stored, wherein the storage device is communicatively coupled to the one or more network devices.
28. A non-transitory computer-readable storage medium comprising computer-executable instructions which, when executed by a processor, cause the processor to:
   receive a connection request from a client device, the connection request including a Media Access Control (MAC) address associated with the client device and being generated using a first pre-shared key;
   access a database comprising a plurality of records associated with a service set identifier (SSID) for the Wi-Fi network, each record associating a MAC address with a respective pre-shared key of a plurality of pre-shared keys, and comprising the plurality of pre-shared keys, to determine whether the database comprises a said record associated with the MAC address;
   depending on an outcome of the determining whether the database comprises the said record perform a first process or a second process, wherein the first process is performed if the database does comprise the said record and the second process is performed if the database does not comprise the said record, the first process comprising:
      determining a second pre-shared key based at least on the said record; and
      authenticating the client device using the second pre-shared key,
      and the second process comprising generating a new record for the database for authenticating the client device on the network.

## Claims

1. A network device for facilitating client devices to connect to a Wi-Fi network, the network device comprising at least one processor, one or more communications modules, and storage storing computer-executable instructions which, when executed by the at least one processor to:
receive a connection request from a client device, the connection request including a Media Access Control (MAC) address associated with the client device and being generated using a first pre-shared key;
access a database comprising a plurality of records associated with a service set identifier (SSID) for the Wi-Fi network, each record associating a MAC address with a respective pre-shared key of a plurality of pre-shared keys, and comprising the plurality of pre-shared keys, to determine whether the database comprises a said record associated with the MAC address;
depending on an outcome of the determining whether the database comprises the said record perform a first process or a second process, wherein the first process is performed if the database does comprise the said record and the second process is performed if the database does not comprise the said record, the first process comprising:
determining a second pre-shared key based at least on the said record; and
authenticating the client device using the second pre-shared key,
and the second process comprising generating a new record for the database for authenticating the client device on the network.

2. The network device of claim 1, wherein determining the second pre-shared key based at least one the said record comprises:
determining a search vector from the said record and identifying the second pre-shared key in the plurality of pre-shared keys using the search vector; or
reading the second pre-shared key from the said record.

3. The network device of claim 1 or claim 2, wherein the computer-executable instructions, when executed by the at least one processor, cause the processor to, dependent on the authenticating the client device using the second pre-shared key being successful:
performing a handshake with the client device; and
providing the client device with access to the network.

4. The network device of any one of claims 1 to 3, wherein the second process further comprises determining whether the client device is using WPA3 or WPA2 and wherein generating a new record for the database is performed in a manner dependent on whether the client device is using WPA3 or WPA2, and
optionally, wherein if the client device is using WPA3 generating the new record for the database comprises:
authenticating the client device using a third pre-shared key, the third pre-shared key being a common pre-shared key;
dependent on the authentication of the client device using the third pre-shared key being successful, providing access to a captive portal to enable the client device to register with the network;
receiving a request from the client device to register with the network using the captive portal; and
generating a new record for the database associating the MAC address with a fourth pre-shared key.

5. The network device of any preceding claim, wherein each of the plurality of pre-shared keys is associated with a respective network configuration, and
optionally, wherein the connection requests are associated with the SSID, and the new record is associated with the SSID.

6. The network device of claim 5, wherein the second process comprises, after generating a new record for the database, associating the MAC address with a fourth pre-shared key, sending a message to the client device instructing the client device to disconnect and send a connection request using the fourth pre-shared key.

7. The network device of claim 6, wherein the computer-executable instructions, when executed by the at least one processor, cause the network device to host the captive portal.

8. The network device of any one of claims 4 to 7, wherein if the client device is using WPA2 generating the new record for the database comprises:
authenticating the client device using an identified fifth pre-shared key, wherein the fifth pre-shared key is identified by iteratively attempting authentication using a different one of the stored plurality of pre-shared keys until authentication is successful;
generating a new record for the database associating the MAC address with the fifth pre-shared key.

9. The network device of any one of claims 4 to 8, wherein determining whether the client device is using WPA2 or WPA3 comprises processing the connection request to determine an indication of whether the client device is using WPA2 or WPA3.

10. The network device of any one of claims 4 to 9, wherein the computer-executable instructions, when executed by the at least one processor, cause the processor to monitor the first process and, if authenticating the client device using the second pre-shared key is unsuccessful:
track a number of unsuccessful authentication attempts using the second pre-shared key; and
if the number of unsuccessful authentication attempts exceeds a predetermined threshold, attempting to handshake with the client device using a third pre-shared key, the third pre-shared key being a common key.

11. The network device of claim 10, wherein tracking the number of unsuccessful authentication attempts includes communicating with one or more further network devices operating in the network.

12. The network device of claim 10 or 11, wherein the computer-executable instructions, when executed by the at least one processor, cause the processor to, if the handshake with the client device is successful:
provide access to a captive portal to enable the client device to register with the network;
receive a request from the client device to register with the network using the captive portal; and
generate a new record for the database associating the MAC address with a fourth pre-shared key.

13. A computer-implemented method for network devices to support multiple pre-shared keys in a Wi-Fi network, the computer-implemented method comprising:
receiving a connection request from a client device requesting to connect to the Wi-Fi network, the connection request including a MAC address associated with the client device and being generated using a first pre-shared key;
accessing a database comprising a plurality of records associated with a service set identifier (SSID) for the Wi-Fi network, each record associating a Media Access Control (MAC) address with a respective pre-shared key of a plurality of pre-shared keys, and comprising the plurality of pre-shared keys;
determining whether the database comprises a said record associated with the MAC address;
dependent on an outcome of the determining whether the database comprises the said record, performing a first process or a second process, wherein the first process is performed if the database does comprise the said record and the second process is performed if the database does not comprise the said record, the first process comprising:
determining a second pre-shared key based at least on the said record; and
authenticating the client device using the second pre-shared key;
and the second process comprising generating a new record for the database for authenticating the client device.

14. A network system comprising one or more network devices as claimed in any one of claims 1 to 12, and
optionally, further comprising a storage device on which the database is stored, wherein the storage device is communicatively couples to the one or more network devices.

15. A non-transitory computer-readable storage medium comprising computer-executable instructions which, when executed by a processor, cause the processor to:
receive a connection request from a client device, the connection request including a Media Access Control (MAC) address associated with the client device and being generated using a first pre-shared key;
access a database comprising a plurality of records associated with a service set identifier (SSID) for the Wi-Fi network, each record associating a MAC address with a respective pre-shared key of a plurality of pre-shared keys, and comprising the plurality of pre-shared keys, to determine whether the database comprises a said record associated with the MAC address;
depending on an outcome of the determining whether the database comprises the said record perform a first process or a second process, wherein the first process is performed if the database does comprise the said record and the second process is performed if the database does not comprise the said record, the first process comprising:
determining a second pre-shared key based at least on the said record; and
authenticating the client device using the second pre-shared key,
and the second process comprising generating a new record for the database for authenticating the client device on the network.
